# EUROPEAN PATENT SPECIFICATION

(11) **EP 3 879 665 B1**
(45) Date of publication and mention of the grant of the patent: **21.08.2024**
(21) Application number: 19881495.6
(22) Date of filing: 19.04.2019
(51) Int. Cl.: H02J 7/00, B60L 53/62, B60L 53/68, B60L 50/60

(54) **AGV CHARGING METHOD AND SYSTEM FOR AUTOMATED TERMINAL**
AGV-LADEVERFAHREN UND SYSTEM FÜR EIN AUTOMATISCHES ENDGERÄT
PROCÉDÉ ET SYSTÈME DE CHARGE DE VGA POUR TERMINAL AUTOMATISÉ

(30) Priority: 07.11.2018 CN 201811319472
(43) Date of publication of application: 15.09.2021
(73) Proprietor: Qingdao Port International Co., Ltd., Qingdao, Shandong 266000 (CN); Qingdao New Qianwan Container Terminal Co., Ltd., Qingdao, Shandong 266000 (CN)
(72) Inventor: ZHANG, Liangang, Qingdao, Shandong 266500 (CN); WANG, Wei, Qingdao, Shandong 266500 (CN); WANG, Hao, Qingdao, Shandong 266500 (CN); SUN, Xiuliang, Qingdao, Shandong 266500 (CN); CUI, Huanlong, Qingdao, Shandong 266500 (CN); ZHU, Lin, Qingdao, Shandong 266500 (CN); XU, Chengsan, Qingdao, Shandong 266500 (CN); XIE, Pengpeng, Qingdao, Shandong 266500 (CN)
(74) Representative: Byrne, Declan
(86) International application number: PCT/CN2019/083413
(87) International publication number: WO 2020/093660

(56) References cited:
- CN-A- 104 836 293
- CN-A- 105 045 268
- CN-A- 107 379 994
- CN-A- 107 379 994
- CN-A- 107 544 310
- CN-A- 107 544 310
- CN-A- 108 528 229
- CN-U- 206 422 542
- US-A1- 2018 152 031

## Description

### Technical field

The invention belongs to the technical field of automated container terminal, and specifically relates to an automated container terminal AGV charging method and a charging system for the same.

### Background

AGV (Automated Guided Vehicle) is a kind of transportation equipment specially designed for automated container terminals, which operates on battery power. The AGV battery pack electrical energy replenishment methods of the prior art mainly include two types: a battery-replacement type and a charging type.

The disadvantage of the battery-replacement type is that a special designed battery-replacement station needs to be built where spare battery packs are provided; due to the fact that the battery used in AGV requires a large battery capacity and the energy consumption of AGV is high, the cost for building battery-replacement stations is huge. Compared with the battery-replacement type, the advantage of the charging type is that there is no need to build battery-replacement stations or provide with spare battery packs, which could reduce the cost. But because the charging type is based on charging piles located in charging areas where AGVs are docked for charging, the number of the charging piles is configured according to the number of AGVs, which increases the cost in another aspect.

In order to reduce the AGV power supply cost of an automated container terminal, in a previous patent application filed by the applicant of the present invention a configuration that a charging device is disposed on an interactive support bracket in a sea-side interactive operation area of a container yard is provided, so as to enable AGVs to be charged during an interactive operation with the interactive support bracket in each repeated working cycle. By disposing the charging device on the interactive support bracket, there is no need to set aside a specialized charging area, thereby reducing the input cost and realizing a shallow charge and a shallow discharge of the battery on the basis of the periodic charging manner.

CN107544310A discloses a device for charging the equipment of an automated dock, which comprises a storage unit, a control unit, and an execution unit. Device information, instruction list, task list, state information, and interaction record are stored by the storage unit. The mapping relationship among the device information, the instruction list, the task list, the state information, and the interaction record are also stored by the storage unit. The control unit is communicated with the storage unit, and the control unit generates a control instruction based on the device information, theinstruction list, the task list, the state information, and the interaction record stored by the storage unit and the information fed back by the execution unit and sends the control instruction to the execution unit. The execution unit is integrated in the equipment. The execution unit acquires the information of the equipment, receives the control instruction sent by the control unit, controls the equipment to execute the control instruction, records the information of the equipment in the execution process, and feeds back the information of the equipment in the execution process to the control unit. The invention also proposes a method for charging the equipment of the automated dock.

CN108528229A discloses an AGV (automatic guided vehicle) charging control system and method based on electric quantity monitoring. The system comprises a vehicular charging control device and a path planning background. The vehicular charging control device comprises a storage battery, an electric quantity detection module, a vehicular processor, an AGV universal controller, a positioning module and a wireless communication module, wherein the vehicular processor is used for acquiring real-time positioning information, transmitting the information to the path planning background, transmitting received planned paths to the AGV universal controller and controlling an AGV to head for a charging station for charging when the electric quantity of the storage battery is too low. A path planning server is used for selecting the nearest AGV charging station as a target charging station according to the real-time positioning information of the AGV, and planning a running path of the AGV heading for the target charging station. The electric quantity can be monitored in the working process of the AGV, the path is planned when the electric quantity is lower than a set threshold value, the AGV heads for the nearest AGV charging station and is charged, and continuous transportation of the AGV is ensured.

US201815203 1A1 discloses an automatic charging device for an AGV on an automated container terminal and a charging method using the same. The automatic charging device comprises a vehicle-mounted device and a ground device. The vehicle-mounted device comprises RFID read-write coils, a charging connector buffer device, a charging connector, a power measuring module, a vehicle charging controller and a vehicle-mounted wireless module. The ground device comprises an RFID label array, a power panel, a conductive groove, a pressure sensor, an electromagnet, a ground charging controller and a ground wireless module. The hook shaped charging plug, the charging connector buffer device and the power panel with the electromagnet improve success rate of connection between the power supply and the plug, and improve AGV working efficiency. RFID technology is used for positioning the charging region with high reliability. The pressure sensor and the safety cover ensure safety of the charging process and prevent electric leakage.

### Summary

The present invention provides an AGV charging method for automated container terminal according to claim 1 and an AGV charging system for automated container terminal according to claim 3, which provide with a shallow charging and shallow discharging strategy for a periodic charging manner of AGVs, so as to extend battery life to the maximum.

In order to solve the above technical problems, the present invention adopts the following technical solutions.

An AGV charging method for automated container terminal includes: determining a power range that a current power belongs to during one AGV operation; if it is determined that the current power belongs to the first power range, the AGV is operated in a normal operation and implemented a periodic charging during an operation in a sea-side interactive operation area of the container yard; if it is determined that the current power belongs to the second power range, the AGV is operated in a normal operation and then guided to drive to a set position for charging when the normal operation is completed; if it is determined that the current power belongs to the third power range, the AGV is guided to drive to a set position for charging; wherein the first power range is higher than the second power range and the second power range is higher than the third power range.

An AGV charging system for automated container terminal includes: a power range determination module, a first power range charging control module, a second power range charging control module and a third power range charging control module; wherein the power range determination module is provided on the AGV and is configured to determine a power range that a current power belongs to during an AGV operation; the first power range charging control module is configured to enable the AGV to be operated in a normal operation and to implement a periodic charging during an operation in a sea-side interactive operation area as the current power belongs to the first power range; the second power range charging control module is configured to enable the AGV to be operated in a normal operation and to drive to a set position for charging when the normal operation is completed as the current power belongs to the second power range; and the third power range charging control module is configured to enable the AGV to drive to a set position for charging as the current power belongs to the third power range, in which the first power range is higher than the second power range and the second power range is higher than the third power range.

The AGV charging method and system for automated container terminal proposed in the present invention firstly determine a power range that a current power of the AGV belonging to and perform a varied charging strategy on the basis of the determined power range: when the current power belongs to the first power range, the AGV is controlled to perform a normal operation in which the AGV is guided to drive to the sea-side interactive operation area and interacts with an interactive support bracket in the sea-side interactive operation area while charging, so as to fulfill a periodic charging for the AGV without occupying the production operation time and to enable the AGV batter to be shallowly charged or discharged to extend battery life effectively; when the current power belongs to the second power range or the third power range, the current power of the AGV does not satisfy with a periodic charging condition and the AGV is controlled to drive to a set position for charging immediately or when the current operation is completed and to perform an upper power limit charging strategy to increase the battery power to the first power range or the second power range as charging so as to enable the battery to satisfy the periodic charging condition and to be shallowly charged or discharged to extend battery life to the maximum.

### Brief Description of the Drawings

Fig. 1 is a flow chart showing an AGV charging method for automated container terminal according to one aspect of the present invention;
Fig. 2 is a block chart showing an AGV charging system for automated container terminal according to one aspect of the present invention;
Fig. 3 is a flow chart showing a charging cycle implemented by an AGV according to one aspect of the present invention.

### Detailed Description

The specific implementation of the present application will be described in further detail below with reference to the drawings.

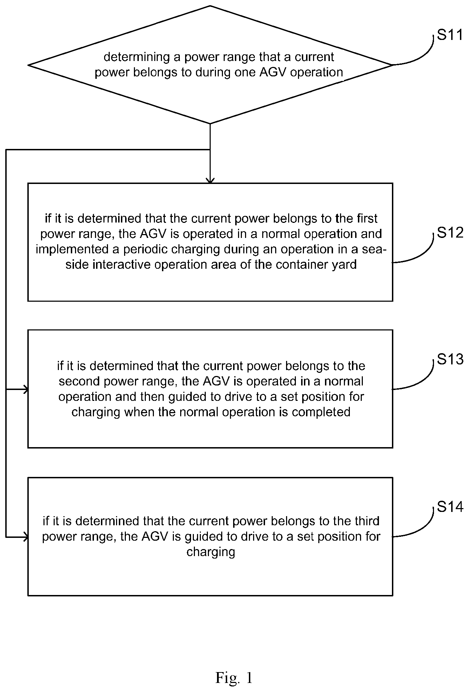

An AGV charging method disclosed by the present invention, as shown in Fig. 1, includes the following steps:
Step S 11: determining a power range that a current power belongs to during one AGV operation.

To be specific, the power range that the current battery power belongs to is determined during an AGV sea-side operation which specifically indicates an unload operation that an AGV is configured to place a container loaded by a crane onto an interactive support bracket located in a sea-side interactive operation area of a container yard by driving through an operating lane, a buffer zone, a high-speed lane and entering into the sea-side interactive operation area, or during a load operation (a reverse process of the unload operation).

In the present invention preferably three power ranges are divided into: a first power range, a second power range and a third power range, wherein the first power range is higher than the second power range and the second power range is higher than the third power range. In the present embodiment, the first power range is defined as 75% ~100%, expressed as a green level, the second power range is defined as 55%~75%, expressed as a yellow level, and the third power range is defined as below 55%, expressed as a red level.

Step S12: if it is determined that the current power belongs to the first power range, the AGV is operated in a normal operation and implemented a periodic charging during an operation in a sea-side interactive operation area of the container yard.

When the current battery power of the AGV belongs to the first power range, the battery power is sufficient to fulfill a normal operation which satisfies a periodic charging condition; the periodic charging refers to a process that each AGV charges once in every operation cycle (unload operation or load operation) wherein the charging event occurs during a period as the AGV entering into a sea-side interactive operation area and interacting with a interactive support bracket, that is to say the AGV could be charged while interacting with the interactive support bracket, and the power supplemented could maintain the battery power of the AGV to be in the first power range, so in the next operation cycle, the AGV could be charged as entering into a sea-side interactive operation area of the container yard again to supplement the energy consumed, thereby achieving a state of repeated shallow charge and shallow discharge.

Step S13: if it is determined that the current power belongs to the second power range, the AGV is operated in a normal operation and then guided to drive to a set position for charging when the normal operation is completed.

When the current battery power of the AGV belongs to the second power range, the battery power is relatively sufficient to fulfill a normal operation but no longer satisfy a shallow-charge-shallow-discharge condition. In order to maintain the battery to be shallowly charged and shallowly discharged, when the current operation is completed, the AGV is guided to drive to a set charging position for charging until the battery power satisfies the shallow-charge-shallow-discharge condition, namely belongs to the first power range.

Step S14: if it is determined that the current power belongs to the third power range, the AGV is guided to drive to a set position for charging.

When the current battery power belongs to the third power range, the battery power is too low to perform a normal operation and the power should be timely filled up. Hence, the AGV is guided to drive to a set charging position for charging until the battery power satisfies the shallow-charge-shallow-discharge condition, namely belongs to the first power range.

In the present invention, a charging device is installed on an interactive support bracket disposed in the sea-side interactive operation area. During the periodic charging as mentioned in Step 12, when the AGV drives to and interacts with the interactive support bracket, a power input device provided on the AGV is coupled to a power output device disposed on the interactive support bracket for performing a shallow-charge-shallow-discharge operation. In order to enable the AGV to be capable of performing a shallow-charge-shallow-discharge operation as much as possible, in Step 13 and Step 14, the AGV is guided to drive to a set position for charging until the battery power increases to the first power range, wherein the set position is a charging area on a designated sea-side interactive operation area interactive support bracket located within the sea-side interactive operation area of the container yard.

The energy consumed by the AGV in one normal operation could be recharged when the AGV interacts with the interactive support bracket in the sea-side interactive operation area of the container yard, so in several cycles the battery charges and discharges shallowly capable of maintaining at an optimal battery state. But in some occasions the AGV power may reduce to the second power range or to the third power range, the adjustments in the Step 13 and Step 14 could enable the AGV battery power to be filled up amounting to the first power range which satisfies the shallow-charge-shallow-discharge condition, so the AGV will operate in the state as describing in Step 12 of a high probability. The periodic charging manner could optimize the battery performance by shallow charge and shallow discharge so as to extend the battery life.

In the present invention, when the current power belongs to the second power range or the third power range, in order to avoid a situation that the AGV power increases to a higher power range but reduces to a lower power range immediately after executing a task, un upper power limit charging strategy is performed; the upper power limit charging strategy indicates that in each charging cycle, the charging target is the upper power limit of a higher power range. For example, when the current power belongs to the third power range, the charging starts and in this charging cycle the current power is only regarded as belonging to the second power range and expressed as a yellow level until the current power amounting to 75%; or only regarded as belonging to the first power range and expressed as a green level until the current power amounting to 100%.

But when determining a power range that a current power belongs to, a lower power limit charging strategy is performed; the lower power limit charging strategy indicates that a lower power limit of each power range is used to determine the power range that the current power belongs to. For example, at first the current AGV power belongs to the first power range; if the current power is reduced to 75% which is the lower power limit of the first power range, it could be determined that the current power belongs to the second power range and expressed as a yellow level; if the current power is reduced to 55% which is the lower power limit of the second power range, it could be determined that the current power belongs to the third power range and expressed as a red level.

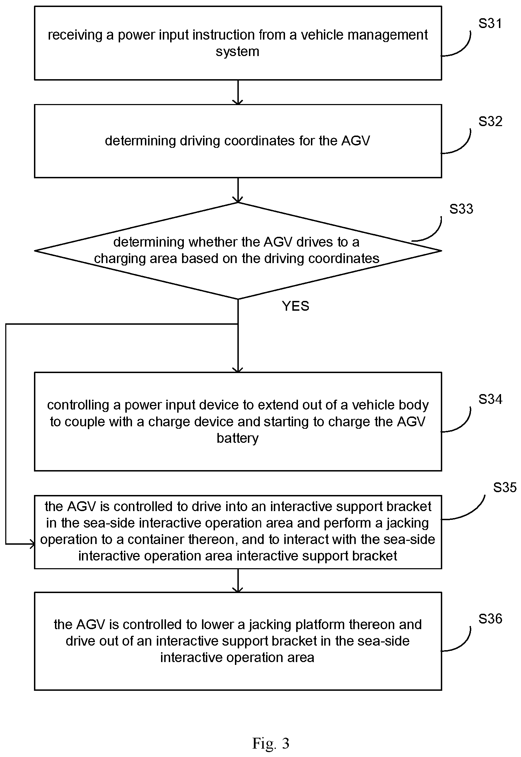

In the present invention, a periodic charging is performed in an interactive operation in the sea-side interactive operation area of the container yard and the specific procedures of the periodic charging are shown in Fig. 3.

Step S31: receiving a power input instruction from a vehicle management system; wherein the power input instruction is generated as the AGV driving to the sea-side interactive operation area of the container yard.

In each operation cycle, when the AGV drives to the sea-side interactive operation area, the vehicle management system issues a power input instruction.

Step S32: determining driving coordinates for the AGV

After the AGV receiving the power input instruction, an independent navigation module of the AGV obtains the driving coordinates for the AGV

Step S33: determining whether the AGV drives to a charging area based on the driving coordinates.

The independent navigation module determines whether the AGV drives to a charging area based on the driving coordinates; if yes,

Step S34: controlling a power input device to extend out of a vehicle body to couple with a charge device and starting to charge the AGV battery.

As the AGV drives to the charging area, the power input device is controlled to extent out of a vehicle body to couple with a charge device disposed on a sea-side interactive operation area interactive support bracket, the charge device starts to charge the AGV battery; wherein the charging area is within a preset area on a designated sea-side interactive operation area interactive support bracket.

As charging the AGV battery, the method further comprises: Step 35: the AGV is controlled to drive into an interactive support bracket in the sea-side interactive operation area and perform a jacking operation to a container thereon, and to interact with the sea-side interactive operation area interactive support bracket; and Step 36: the AGV is controlled to lower a jacking platform thereon and drive out of an interactive support bracket in the sea-side interactive operation area. The dual operations could be performed at the same time so as to improve charging efficiency.

The AGV charging method for automated container terminal provided by the present invention firstly determines a power range that a current power of the AGV belonging to and performs a varied charging strategy on the basis of the determined power range: when the current power belongs to the first power range, the AGV is controlled to perform a normal operation in which the AGV is guided to drive to the sea-side interactive operation area and interacts with an interactive support bracket in the sea-side interactive operation area while charging, so as to fulfill a periodic charging for the AGV without occupying the production operation time and to enable the AGV batter to be shallowly charged or discharged to extend battery life effectively; when the current power belongs to the second power range or the third power range, the current power of the AGV does not satisfy with a periodic charging condition and the AGV is controlled to drive to a set position for charging immediately or when the current operation is completed and to perform an upper power limit charging strategy to increase the battery power to the first power range or the second power range as charging so as to enable the battery to satisfy the periodic charging condition and to be shallowly charged or discharged to extend battery life to the maximum.

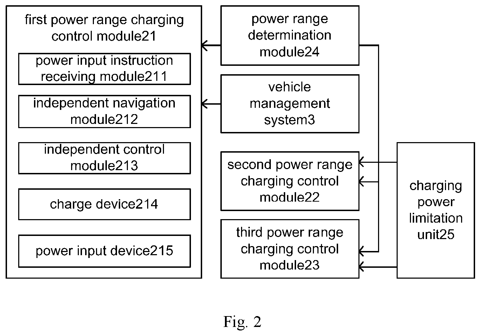

Based on the above described AGV charging method for automated container terminal provided by the present invention, an AGV charging system for automated container terminal is disclosed. Shown in Fig. 2, the AGV charging system comprises: a power range determination module 24, a first power range charging control module 21, a second power range charging control module 22 and a third power range charging control module 23.

The power range determination module 24 is provided on the AGV and is configured to determine a power range that a current power belongs to during an AGV operation; the first power range charging control module 21 is configured to enable the AGV to be operated in a normal operation and to implement a periodic charging during an operation in a sea-side interactive operation area as the current power belongs to the first power range; the second power range charging control module 22 is configured to enable the AGV to be operated in a normal operation and to drive to a set position for charging when a current operation is completed as the current power belongs to the second power range; and the third power range charging control module 23 is configured to enable the AGV to drive to set position for charging as the current power belongs to the third power range, wherein the first power range is higher than the second power range and the second power range is higher than the third power range.

Each of the second power range charging control module 22 and the third power range charging control module23 includes a charging power limitation unit 25; the charging power limitation unit 25 is configured to enable the battery to be charged to the upper limit of a higher power range.

In the present embodiment of the present invention, the power range determination module 24 includes a determination limitation unit 241 configured to determine the power range that the current power belongs to on the basis of a lower power limit of each power range.

Specifically, the first power range charging control module 21 includes a power input instruction receiving module 211, an independent navigation module 212, an independent control module 213, a charge device 214 and a power input device 215; wherein the power input device 215 is installed on the AGV and the charge device 214 is installed on a sea-side interactive operation area interactive support bracket, which is located inside the sea-side interactive operation area of the container yard; the power input instruction receiving module 211 is configured to receive a power input instruction from a vehicle management system 3; wherein the power input instruction is generated as the AGV driving to the sea-side interactive operation area of the container yard; the independent navigation module 212 is configured to determine driving coordinates for the AGV; the independent control module 213 is configured to determine whether the AGV drives to a charging area based on the driving coordinates; if yes, controlling the power input device 215 to extend out of a vehicle body to couple with the charge device 214 to perform AGV charging; wherein the charging area is located in a preset area on the sea-side interactive operation area interactive support bracket, which is located in the sea-side interactive operation area.

The specific charging method executed by the automated terminal AGV charging system has been detailed described in the above charging method, and will not be repeated here.

The above-mentioned AGV charging method and system for automated container terminal provided by the present invention firstly determines a power range that a current power of the AGV belongs to and performs a varied charging strategy on the basis of the determined power range, with an aim at maintaining the battery at a shallow charge and shallow discharge state so as to extent the battery life.

It should be pointed out that the above description is not a limitation of the present invention, and the present invention is not limited to the above examples.

## Claims

1. An AGV charging method for an automated container terminal including:
determining a power range that a current power of a battery of the AVG belongs to during one AGV operation;
if it is determined that the current power belongs to a first power range, the AGV is operated in a normal operation while implementing a periodic charging during an operation in a sea-side interactive operation area of a container yard of the automated container terminal, wherein the periodic charging comprises charging of the battery of the AVG once during an unload operation or a load operation performed with the AVG, wherein the battery charging occurs when the AGV is entering into the sea-side interactive operation area and interacting with an interactive support bracket so as to be charged while interacting with the interactive support bracket, and the power supplemented to the battery allows to maintain the battery power of the AGV in the first power range to achieve a repeated shallow charge and shallow discharge in the first power range;
if it is determined that the current power belongs to a second power range, the AGV is operated in the normal operation and then guided to drive to a set position for charging the battery when the normal operation is completed, the battery being charged until the battery power is in the first power range to allow shallow charging and shallow discharging of the battery;
if it is determined that the current power belongs to a third power range, the AGV is guided to drive to a set position for charging, the battery being charged until the battery power is in the first power range to allow shallow charging and shallow discharging of the battery;
wherein the first power range is higher than the second power range and the second power range is higher than the third power range; and
wherein when the current power of the battery belongs to the second power range or the third power range, further comprising:
in each charging cycle, a charging target is an upper power limit of the higher first power range to avoid a reduction to the second power range immediately after the AGV executes a task; and
wherein when determining the power range that a current power of the battery belongs to, further comprising:
using a lower power limit of the first power range to determine that the power range that the current power belongs to is the second power range, and using a lower power limit of the second power range to determine that the power range that the current power belongs to is the third power range; and
wherein the periodic charging performed in the sea-side interactive operation area of the container yard includes:
receiving a power input instruction from a vehicle management system; wherein the power input instruction is generated as the AGV is driving to the sea-side interactive operation area of the container yard;
determining driving coordinates for the AGV;
determining whether the AGV drives to a charging area based on the driving coordinates; if yes,
controlling a power input device (215) to extend out of a vehicle body to couple with a charge device (214) and starting to charge the AGV battery;
wherein the power input device (215) is provided on the AGV and the charge device (214) is provided on the sea-side interactive operation area interactive support bracket located in the sea-side interactive operation area, and the charging area is within a preset area on the sea-side interactive operation area interactive support bracket.

2. An AGV charging method for automated container terminal according to claim 1, **characterized in that**,
the set position for charging is the charging area on the sea-side interactive operation area interactive support bracket in the sea-side interactive operation area of the container yard.

3. An AGV charging system for automated container terminal
including: a power range determination module (24), a first power range charging control module (21), a second power range charging control module (22) and a third power range charging control module (23);
wherein the power range determination module (24) is provided on the AGV and is configured to determine a power range that a current power belongs to during an AGV operation; the AGV charging system being **characterized in that**:
the first power range charging control module (21) is configured to enable the AGV to be operated in a normal operation and to implement a periodic charging of a battery of the AGV during an operation in a sea-side interactive operation area of a container yard of the automated container terminal if the current power belongs to a first power range, wherein the periodic charging comprises charging of the battery of the AVG once during an unload operation or a load operation performed with the AVG, wherein the battery charging occurs when the AGV is entering into the sea-side interactive operation area and interacting with an interactive support bracket so as to be charged while interacting with the interactive support bracket, and the power supplemented to the battery allows to maintain the battery power of the AGV in the first power range to achieve a repeated shallow charge and shallow discharge in the first power range;
the second power range charging control module (22) is configured to enable the AGV to be operated in a normal operation and to drive to a set position for battery charging when the normal operation is completed if the current power belongs to a second power range, the battery being charged until the battery power is in the first power range to allow shallow charging and shallow discharging of the battery; and
the third power range charging control module (23) is configured to enable the AGV to drive to a set position for battery charging if the current power belongs to a third power range the battery being charged until the battery power is in the first power range to allow shallow charging and shallow discharging of the battery,
wherein the first power range is higher than the second power range and the second power range is higher than the third power range; and
wherein each of the second power range charging control module (22) and the third power range charging control module (23) includes a charging power limitation unit (25); the charging power limitation unit (25) is configured to enable the battery to be charged to an upper limit of the higher first power range, and
wherein the power range determination module (24) includes a determination limitation unit configured to determine the power range that the current power of the battery belongs to on the basis of a lower power limit of the first power range to determine that the power range that the current power belongs to is the second power range, and on the basis of a lower power limit of the second power range to determine that the power range that the current power belongs to is the third power range, and
wherein the first power range charging control module (21) includes a power input instruction receiving module (211), an independent navigation module (212), an independent control module (213), a charge device (214) and a power input device (215); wherein the power input device (215) is installed on the AGV and the charge device (214) is installed on the sea-side interactive operation area interactive support bracket, which is located inside the sea-side interactive operation area of the container yard; the power input instruction receiving module (211) is configured to receive a power input instruction from a vehicle management system; wherein the power input instruction is generated as the AGV driving to the sea-side interactive operation area of the container yard; the independent navigation module (212) is configured to determine driving coordinates for the AGV; the independent control module (213) is configured to determine whether the AGV drives to a charging area based on the driving coordinates; if yes, controlling the power input device (215) to extend out of a vehicle body to couple with the charge device (214) to perform AGV charging; wherein the charging area is located within a preset area on the sea-side interactive operation area interactive support bracket, which is located in the sea-side interactive operation area.

4. An AGV charging system for automated container terminal according to claim 3, **characterized in that**, the set position for charging is the charging area on the sea-side interactive operation area interactive support bracket in the sea-side interactive operation area of the container yard.

## Patentansprüche

1. AGV-Ladeverfahren für ein automatisiertes Containerterminal, das Folgendes beinhaltet:
Bestimmen einer Stromspanne, zu der der Strom einer Batterie des AVG gehört, während eines AGV-Betriebs;
wenn bestimmt wird, dass der aktuelle Strom zu einer ersten Stromspanne gehört, wird das AGV in einem Normalbetrieb betrieben, während ein periodisches Laden während eines Betriebs in einem seeseitigen interaktiven Betriebsbereich eines Containerhofs des automatisierten Containerterminals implementiert wird, wobei das periodische Laden das einmalige Laden der Batterie des AVG während eines Entladebetriebs oder eines Ladebetriebs mit dem AVG umfasst, wobei das Laden der Batterie erfolgt, wenn das AGV in den seeseitigen interaktiven Betriebsbereich eintritt und mit einer interaktiven Stützhalterung interagiert, um geladen zu werden, während mit der interaktiven Stützhalterung interagiert wird, und der Strom, der der Batterie zugeführt wird, es erlaubt, den Batteriestrom des AGV in der ersten Stromspanne zu halten, um ein wiederholtes geringes Laden und geringes Entladen in der ersten Stromspanne zu erreichen;
wenn bestimmt wird, dass der aktuelle Strom zu einer zweiten Stromspanne gehört, wird das AGV im Normalbetrieb betrieben und dann geführt, um zu einer eingestellten Position zum Laden der Batterie zu fahren, wenn der Normalbetrieb abgeschlossen ist, wobei die Batterie geladen wird, bis sich der Batteriestrom in der ersten Stromspanne befindet, um ein geringes Laden und geringes Entladen der Batterie zu erlauben;
wenn bestimmt wird, dass der aktuelle Strom zu einer dritten Stromspanne gehört, wird das AGV geführt, um zu einer eingestellten Position zum Laden zu fahren, wobei die Batterie geladen wird, bis sich der Batteriestrom in der ersten Stromspanne befindet, um ein geringes Laden und geringes Entladen der Batterie zu erlauben;
wobei die erste Stromspanne höher ist als die zweite Stromspanne und die zweite Stromspanne höher ist als die dritte Stromspanne und
wobei es, wenn der aktuelle Strom der Batterie zur zweiten Stromspanne oder zur dritten Stromspanne gehört, ferner Folgendes umfasst:
in jedem Ladezyklus ist ein Ladeziel eine obere Stromsgrenze der höheren ersten Stromspanne, um eine Reduzierung auf die zweite Stromspanne unmittelbar nach Ausführen einer Aufgabe durch das AGV zu vermeiden; und
wobei es, wenn die Stromspanne bestimmt wird, zu der der aktuelle Strom der Batterie gehört, ferner Folgendes umfasst:
Verwenden einer niedrigeren Stromgrenze der ersten Stromspanne, um zu bestimmen, dass die Stromspanne, zu der der aktuelle Strom gehört, die zweite Stromspanne ist, und Verwenden einer niedrigeren Stromgrenze der zweiten Stromspanne, um zu bestimmen, dass die Stromspanne, zu der der aktuelle Strom gehört, die dritte Stromspanne ist; und
wobei das periodische Laden, das im seeseitigen interaktiven Betriebsbereich des Containerhofs durchgeführt wird, Folgendes beinhaltet:
Empfangen einer Stromeingabeanweisung von einem Fahrzeugverwaltungssystem; wobei die Stromeingabeanweisung erzeugt wird, wenn das AGV zum seeseitigen interaktiven Betriebsbereich des Containerhofs fährt;
Bestimmen von Fahrkoordinaten für das AGV;
Bestimmen auf Basis der Fahrkoordinaten, ob das AGV zu einem Ladebereich fährt; wenn ja,
Steuern einer Stromeingabevorrichtung (215) derart, dass sie sich aus einem Fahrzeugkörper erstreckt, um sich an eine Ladevorrichtung (214) zu koppeln, und Starten des Ladens der AGV-Batterie;
wobei die Stromeingabevorrichtung (215) am AGV bereitgestellt ist und die Ladevorrichtung (214) an der interaktiven Stützhalterung des seeseitigen interaktiven Betriebsbereichs, die sich im seeseitigen interaktiven Betriebsbereich befindet, bereitgestellt ist und der Ladebereich innerhalb eines voreingestellten Bereichs der interaktiven Stützhalterung im seeseitigen interaktiven Betriebsbereich liegt.

2. AGV-Ladeverfahren für ein automatisiertes Containerterminal nach Anspruch 1, **dadurch gekennzeichnet, dass**,
die eingestellte Position zum Laden der Ladebereich der interaktiven Stützhalterung im seeseitigen interaktiven Betriebsbereich im seeseitigen interaktiven Betriebsbereich des Containerhofs ist.

3. AGV-Ladesystem für ein automatisiertes Containerterminal, das Folgendes beinhaltet:
ein Stromspannenbestimmungsmodul (24), ein Ladesteuermodul (21) für eine erste Stromspanne, ein Ladesteuermodul (22) für eine zweite Stromspanne und ein Ladesteuermodul (23) für eine dritte Stromspanne;
wobei das Stromspannenbestimmungsmodul (24) am AGV bereitgestellt und dazu ausgelegt ist, eine Stromspanne, zu der ein aktueller Strom gehört, während eines AGV-Betriebs zu bestimmen; wobei das AGV-Ladesystem **dadurch gekennzeichnet ist, dass**:
das Ladesteuermodul (21) für die erste Stromspanne dazu ausgelegt ist, es dem AGV zu ermöglichen, in einem Normalbetrieb betrieben zu werden und ein periodisches Laden einer Batterie des AGV während eines Betriebs in einem seeseitigen interaktiven Betriebsbereich eines Containerhofs des automatisierten Containerterminals zu implementieren, wenn der aktuelle Strom zu einer ersten Stromspanne gehört, wobei das periodische Laden das einmalige Laden der Batterie des AVG während eines Entladebetriebs oder eines Ladebetriebs mit dem AVG umfasst, wobei das Laden der Batterie erfolgt, wenn das AGV in den seeseitigen interaktiven Betriebsbereich eintritt und mit einer interaktiven Stützhalterung interagiert, um geladen zu werden, während mit der interaktiven Stützhalterung interagiert wird, und der Strom, der der Batterie zugeführt wird, es erlaubt, den Batteriestrom des AGV in der ersten Stromspanne zu halten, um ein wiederholtes geringes Laden und geringes Entladen in der ersten Stromspanne zu erreichen;
das Ladesteuermodul (22) für die zweite Stromspanne dazu ausgelegt ist, es dem AGV zu ermöglichen, in einem Normalbetrieb betrieben zu werden und zu einer eingestellten Position zum Batterieladen zu fahren, wenn der Normalbetrieb abgeschlossen ist, wenn der aktuelle Strom zu einer zweiten Stromspanne gehört, wobei die Batterie geladen wird, bis sich der Batteriestrom in der ersten Stromspanne befindet, um ein geringes Laden und geringes Entladen der Batterie zu erlauben; und
das Ladesteuermodul (23) für die dritte Stromspanne dazu ausgelegt ist, es dem AGV zu ermöglichen, zu einer eingestellten Position zum Batterieladen zu fahren, wenn der aktuelle Strom zu einer dritten Stromspanne gehört, wobei die Batterie geladen wird, bis sich der Batteriestrom in der ersten Stromspanne befindet, um ein geringes Laden und geringes Entladen der Batterie zu erlauben,
wobei die erste Stromspanne höher ist als die zweite Stromspanne und die zweite Stromspanne höher ist als die dritte Stromspanne und
wobei jedes des Ladesteuermoduls (22) der zweiten Stromspanne und des dritten Ladesteuermoduls (23) der dritten Stromspanne eine Ladestromsbegrenzungseinheit (25) beinhaltet; die Ladestrombegrenzungseinheit (25) dazu ausgelegt ist, es der Batterie zu erlauben, bis zu einer Obergrenze der höheren ersten Stromspanne geladen zu werden, und
wobei das Stromspannenbestimmungsmodul (24) eine Bestimmungsbegrenzungseinheit beinhaltet, die dazu ausgelegt ist, auf Basis einer niedrigeren Stromgrenze der ersten Stromspanne die Stromspanne zu bestimmen, zu der der aktuelle Strom der Batterie gehört, um zu bestimmen, dass die Stromspanne, zu der der aktuelle Strom gehört, die zweite Stromspanne ist, und auf Basis einer niedrigeren Stromgrenze der zweiten Stromspanne, um zu bestimmen, dass die Stromspanne, zu der der aktuelle Strom gehört, die dritte Stromspanne ist, und
wobei das Ladesteuermodul (21) für die erste Stromspanne ein Stromeingabeanweisungsempfangsmodul (211), ein unabhängiges Navigationsmodul (212), ein unabhängiges Steuermodul (213), eine Ladevorrichtung (214) und eine Stromeingabevorrichtung (215) beinhaltet; wobei die Stromeingabevorrichtung (215) am AGV installiert ist und die Ladevorrichtung (214) an der interaktiven Stützhalterung des seeseitigen interaktiven Betriebsbereichs installiert ist, die sich im seeseitigen interaktiven Betriebsbereich des Containerhofs befindet, das Stromeingabeanweisungsempfangsmodul (211) dazu ausgelegt ist, eine Stromeingabeanweisung von einem Fahrzeugverwaltungssystem zu empfangen; wobei die Stromeingabeanweisung erzeugt wird, wenn das AGV zum seeseitigen interaktiven Betriebsbereich des Containerhofs fährt; das unabhängige Navigationsmodul (212) dazu ausgelegt ist, Fahrkoordinaten für das AGV zu bestimmen; das unabhängige Steuermodul (213) dazu ausgelegt ist, auf Basis der Fahrkoordinaten zu bestimmen, ob das AGV zu einem Ladebereich fährt; wenn ja, Steuern der Stromeingabevorrichtung (215) derart, dass es sich aus einem Fahrzeugkörper erstreckt, um sich an die Ladevorrichtung (214) zu koppeln, um ein AGV-Laden durchzuführen; wobei sich der Ladebereich in einem voreingestellten Bereich an der interaktiven Stützhalterung des seeseitigen interaktiven Betriebsbereichs befindet, die sich im seeseitigen interaktiven Betriebsbereich befindet.

4. AGV-Ladesystem für ein automatisiertes Containerterminal nach Anspruch 3, **dadurch gekennzeichnet, dass** die eingestellte Position zum Laden der Ladebereich der interaktiven Stützhalterung im seeseitigen interaktiven Betriebsbereich im seeseitigen interaktiven Betriebsbereich des Containerhofs ist.

## Revendications

1. Procédé de charge de VGA pour un terminal à conteneurs automatisé incluant :
la détermination d'une plage de puissance à laquelle une puissance actuelle d'une batterie du VGA appartient pendant une opération de VGA ;
s'il est déterminé que la puissance actuelle appartient à une première plage de puissance, le VGA est exploité dans une opération normale tout en mettant en œuvre une charge périodique pendant une opération dans une zone d'opération interactive côté mer d'une aire de stockage de conteneurs du terminal à conteneurs automatisé, dans lequel la charge périodique comprend la charge de la batterie du VGA une fois pendant une opération de déchargement ou une opération de chargement réalisée avec le VGA, dans lequel la charge de batterie se produit lorsque le VGA entre dans la zone d'opération interactive côté mer et interagit avec un support de soutien interactif de façon à être chargé tout en interagissant avec le support de soutien interactif, et la puissance ajoutée à la batterie autorise le maintien de la puissance de batterie du VGA dans la première plage de puissance pour obtenir une charge peu profonde répétée et une décharge peu profonde dans la première plage de puissance ;
s'il est déterminé que la puissance actuelle appartient à une deuxième plage de puissance, le VGA est exploité dans l'opération normale et ensuite guidé à conduire jusqu'à une position définie pour charger la batterie lorsque l'opération normale est achevée, la batterie étant chargée jusqu'à ce que la puissance de batterie soit dans la première plage de puissance pour autoriser une charge peu profonde et une décharge peu profonde de la batterie ;
s'il est déterminé que la puissance actuelle appartient à une troisième plage de puissance, le VGA est guidé à conduire jusqu'à une position définie pour la charge, la batterie étant chargée jusqu'à ce que la puissance de batterie soit dans la première plage de puissance pour autoriser une charge peu profonde et une décharge peu profonde de la batterie ;
dans lequel la première plage de puissance est plus élevée que la deuxième plage de puissance et la deuxième plage de puissance est plus élevée que la troisième plage de puissance ; et
dans lequel lorsque la puissance actuelle de la batterie appartient à la deuxième plage de puissance ou à la troisième plage de puissance, le fait de comprendre en outre :
dans chaque cycle de charge, une cible de charge est une limite de puissance supérieure de la première plage de puissance plus élevée pour éviter une réduction de la deuxième plage de puissance immédiatement après que le VGA a exécuté une tâche ; et
dans lequel lors de la détermination de la plage de puissance à laquelle une puissance actuelle de la batterie appartient, le fait de comprendre en outre :
l'utilisation d'une limite de puissance plus basse de la première plage de puissance pour déterminer que la plage de puissance à laquelle la puissance actuelle appartient est la deuxième plage de puissance, et l'utilisation d'une limite de puissance plus basse de la deuxième plage de puissance pour déterminer que la plage de puissance à laquelle la puissance actuelle appartient est la troisième plage de puissance ; et dans lequel la charge périodique réalisée dans la zone d'opération interactive côté mer de l'aire de stockage de conteneurs inclut :
la réception d'une instruction d'entrée de puissance provenant d'un système de gestion de véhicule ; dans lequel l'instruction d'entrée de puissance est générée à mesure que le VGA est en train de conduire jusqu'à la zone d'opération interactive côté mer de l'aire de stockage de conteneurs ;
la détermination de coordonnées de conduite pour le VGA ;
la détermination que le VGA conduit ou non jusqu'à une zone de charge sur la base des coordonnées de conduite ; si oui,
le fait de commander un dispositif d'entrée de puissance (215) pour qu'il s'étende hors d'une carrosserie de véhicule afin de se coupler à un dispositif de charge (214) et de commencer à charger la batterie du VGA ;
dans lequel le dispositif d'entrée de puissance (215) est fourni sur le VGA et le dispositif de charge (214) est fourni sur le support de soutien interactif de zone d'opération interactive côté mer situé dans la zone d'opération interactive côté mer, et la zone de charge est à l'intérieur d'une zone prédéfinie sur le support de soutien interactif de zone d'opération interactive côté mer.

2. Procédé de charge de VGA pour terminal à conteneurs automatisé selon la revendication 1, **caractérisé en ce que**,
la position définie pour la charge est la zone de charge sur le support de soutien interactif de zone d'opération interactive côté mer dans la zone d'opération interactive côté mer de l'aire de stockage de conteneurs.

3. Système de charge de VGA pour un terminal à conteneurs automatisé incluant : un module de détermination de plage de puissance (24), un module de commande de charge de première plage de puissance (21), un module de commande de charge de deuxième plage de puissance (22) et un module de commande de charge de troisième plage de puissance (23) ;
dans lequel le module de détermination de plage de puissance (24) est fourni sur le VGA et est configuré pour déterminer une plage de puissance à laquelle une puissance actuelle appartient pendant une opération de VGA ; le système de charge de VGA étant **caractérisé en ce que** :
le module de commande de charge de première plage de puissance (21) est configuré pour permettre au VGA d'être exploité dans une opération normale et pour mettre en œuvre une charge périodique d'une batterie du VGA pendant une opération dans une zone d'opération interactive côté mer d'une aire de stockage de conteneurs du terminal à conteneurs automatisé si la puissance actuelle appartient à une première plage de puissance, dans lequel la charge périodique comprend la charge de la batterie du VGA une fois pendant une opération de déchargement ou une opération de chargement réalisée avec le VGA, dans lequel la charge de batterie se produit lorsque le VGA entre dans la zone d'opération interactive côté mer et interagit avec un support de soutien interactif de façon à être chargé tout en interagissant avec le support de soutien interactif, et la puissance ajoutée à la batterie autorise le maintien de la puissance de batterie du VGA dans la première plage de puissance pour obtenir une charge peu profonde répétée et une décharge peu profonde dans la première plage de puissance ;
le module de commande de charge de deuxième plage de puissance (22) est configuré pour permettre au VGA d'être exploité dans une opération normale et de conduire jusqu'à une position définie pour une charge de batterie lorsque l'opération normale est achevée si la puissance actuelle appartient à une deuxième plage de puissance, la batterie étant chargée jusqu'à ce que la puissance de batterie soit dans la première plage de puissance pour autoriser une charge peu profonde et une décharge peu profonde de la batterie ; et
le module de commande de charge de troisième plage de puissance (23) est configuré pour permettre au VGA de conduire jusqu'à une position définie pour une charge de batterie si la puissance actuelle appartient à une troisième plage de puissance, la batterie étant chargée jusqu'à ce que la puissance de batterie soit dans la première plage de puissance pour autoriser une charge peu profonde et une décharge peu profonde de la batterie,
dans lequel la première plage de puissance est plus élevée que la deuxième plage de puissance et la deuxième plage de puissance est plus élevée que la troisième plage de puissance ; et
dans lequel chacun du module de commande de charge de deuxième plage de puissance (22) et du module de commande de charge de troisième plage de puissance (23) inclut une unité de limitation de puissance de charge (25) ; l'unité de limitation de puissance de charge (25) est configurée pour permettre à la batterie d'être chargée à une limite supérieure de la première plage de puissance plus élevée, et
dans lequel le module de détermination de plage de puissance (24) inclut une unité de limitation de détermination configurée pour déterminer la plage de puissance à laquelle la puissance actuelle de la batterie appartient sur la base d'une limite de puissance plus basse de la première plage de puissance pour déterminer que la plage de puissance à laquelle la puissance actuelle appartient est la deuxième plage de puissance, et sur la base d'une limite de puissance plus basse de la deuxième plage de puissance pour déterminer que la plage de puissance à laquelle la puissance actuelle appartient est la troisième plage de puissance, et
dans lequel le module de commande de charge de première plage de puissance (21) inclut un module de réception d'instruction d'entrée de puissance (211), un module de navigation indépendant (212), un module de commande indépendant (213), un dispositif de charge (214) et un dispositif d'entrée de puissance (215) ; dans lequel le dispositif d'entrée de puissance (215) est installé sur le VGA et le dispositif de charge (214) est installé sur le support de soutien interactif de zone d'opération interactive côté mer, qui est situé à l'intérieur de la zone d'opération interactive côté mer de l'aire de stockage de conteneurs ; le module de réception d'instruction d'entrée de puissance (211) est configuré pour recevoir une instruction d'entrée de puissance en provenance d'un système de gestion de véhicule ; dans lequel l'instruction d'entrée de puissance est générée à mesure que le VGA conduit jusqu'à la zone d'opération interactive côté mer de l'aire de stockage de conteneurs ; le module de navigation indépendant (212) est configuré pour déterminer des coordonnées de conduite pour le VGA ; le module de commande indépendant (213) est configuré pour déterminer si le VGA conduit ou non jusqu'à une zone de charge sur la base des coordonnées de conduite ; si oui, le fait de commander le dispositif d'entrée de puissance (215) pour qu'il s'étende hors d'une carrosserie de véhicule afin de se coupler au dispositif de charge (214) pour réaliser une charge de VGA ; dans lequel la zone de charge est située à l'intérieur d'une zone prédéfinie sur le support de soutien interactif de zone d'opération interactive côté mer, qui est situé dans la zone d'opération interactive côté mer.

4. Système de charge de VGA pour terminal à conteneurs automatisé selon la revendication 3, **caractérisé en ce que** la position définie pour la charge est la zone de charge sur le support de soutien interactif de zone d'opération interactive côté mer dans la zone d'opération interactive côté mer de l'aire de stockage de conteneurs.
